# EUROPÄISCHE PATENTSCHRIFT

(11) **EP 1 370 403 B1**
(45) Veröffentlichungstag und Bekanntmachung des Hinweises auf die Patenterteilung: **28.09.2005**
(21) Anmeldenummer: 02704607.7
(22) Anmeldetag: 17.01.2002
(51) Int. Cl.: B29B 7/00, B29C 37/00, B29C 47/08

(54) **COMPOUNDIERANLAGE**
COMPOUNDER INSTALLATION
INSTALLATION DE PREPARATION DE MELANGES

(30) Priorität: 22.01.2001 DE 10104311
(43) Veröffentlichungstag der Anmeldung: 17.12.2003
(73) Patentinhaber: Berstorff GmbH, 30625 Hannover (DE)
(72) Erfinder: CHSZANIECKI, Siegfried, 30171 Hannover (DE)
(74) Vertreter: Zollner, Richard
(86) Internationale Anmeldenummer: PCT/DE2002/000211
(87) Internationale Veröffentlichungsnummer: WO 2002/057059

(56) Entgegenhaltungen:
- EP-A- 0 607 790
- WO-A-97/21528
- DE-A- 19 848 161

## Beschreibung

Die Erfindung betrifft eine Compoundieranlage gemäß dem Gattungsbegriff des Patentanspruchs 1.

Eine solche Anlage ist z.B. aus der EP-A-0 607 790 bekannt.

Compoundieranlagen, in denen beispielsweise Kunststoffe mit Zusatzstoffen wie etwa Fasermaterialien und mit Additiven und Farbstoffen versetzt und zu einem weiterverarbeitbaren, in der Regel granulierten, compoundierten Einsatzmaterial verarbeitet werden, besitzen als Kemstück im Regelfall einen Schneckenextruder zur Mischung der diversen Einsatzstoffe. Üblicherweise handelt es sich bei den Mischaggregaten um gleichsinnig- oder gegensinnig drehende Doppelschneckenextruder, die von einem Antriebsmodul, welches im Regelfall aus einem Elektromotor und einem damit verbundenen Getriebe besteht, antreibbar ist. Selbstverständlich ist es auch möglich, einen anderen Antrieb, beispielsweise einen Hydraulikmotor vorzusehen. Ein solches Mischaggregat ist bisher regelmäßig mit einem eigenen Maschinengestell ausgestattet, in dem das Antriebsmodul und der Verfahrensteil (Extrudergehäuse mit dem Extrusionsraum) gelagert sind. Es war bisher üblich, das Mischaggregat und die zu seinem Betrieb erforderlichen Zu- und Ableitungen für Einsatzstoffe und Hilfs- und Betriebsstoffe und Energie sowie für Mess-Steuer- und Regeltechnik sowie die erforderlichen Schaltschränke und Zusatzeinrichtungen (z.B. Dosierwaagen, Absaugeinrichtungen) getrennt zu transportieren und am Einsatzort aufzustellen und miteinander funktionsfähig zu verbinden. Dies erfordert ein erheblichen Montageaufwand und darüber hinaus auch wesentlichen Aufwand für das Einfahren der Compoundieranlage durch das Personal des Anlagenherstellers am Einsatzort.

Zur Verminderung dieses Montage- und Einfahraufwands ist es bekannt geworden, zumindest die wesentlichen Teile einer Compoundieranlage, d.h. insbesondere das eigentliche Mischaggregat mit der zu seinem Betrieb erforderlichen Peripherie in einem Raumtragwerk bereits im Herstellerwerk betriebsfertig zu installieren und in dieser praktisch betriebsbereiten Form zusammen mit dem Raumtragwerk an den Einsatzort zu transportieren, wo das Raumtragwerk lediglich auf einem vorbereiteten Fundament aufgesetzt und verankert werden muss. Die Zu- und Ableitungen für den Betrieb der Compoundieranlage müssen dabei nicht mehr am Einsatzort verlegt und montiert werden, so dass sich die Inbetriebnahmezeit auf einen kleinen Bruchteil der sonst üblichen Zeit vermindert. Das Raumtragwerk übernimmt hierbei also nicht nur eine wesentliche Funktion für den Transport der Compoundieranlage, sondern bleibt auch am Einsatzort Teil der gesamten Anlage und hat somit auch die Funktion eines Montagegestells, das lediglich auf ein Fundament aufgesetzt werden muss.

Die werkseitige Montage der Leitungen und Einzelaggregate in oder an dem Raumtragwerk bringt jedoch auch einen erheblichen Nachteil mit sich, da Schwingungen, die insbesondere durch das Antriebsmodul des Mischaggregats entstehen, über das Traggestell auch auf andere Aggregate übertragen werden, die gegen Schwingungen empfindlich sind. Ein Beispiel hierfür sind etwa Dosierwaagen deren Genauigkeit durch mechanische Schwingungen gestört wird. Solche Schwingungen können auch für elektronische Geräte schädlich sein und beispielsweise zu Störungen durch Lockerung gesteckter Platinen führen.

Abhilfemaßnahmen, die darin bestehen, das Mischaggregat mit seinem Antriebsmodul nicht unmittelbar mit dem Raumtragwerk zu verbinden, sondern Dämpfungselemente (z.B: Gummipolster) zwischenzuschalten, haben zwar zu einer deutlichen, aber in vielen Fällen nicht ausreichenden Verbesserung geführt.

Aufgabe der vorliegenden Erfindung ist es, eine Compoundieranlage gemäß dem Gattungsbegriff des Patentanspruchs 1 dahingehend weiterzubilden, dass die durch das Antriebsmodul des Mischaggregats verursachten mechanischen Schwingungen nicht zu Störungen beim Betrieb der Compoundieranlage führen. Der damit verbundene Aufwand soll möglichst gering sein.

Gelöst wird diese Aufgabe erfindungsgemäß durch eine Vorrichtung mit den im Patentanspruch 1 genannten Merkmalen. In den Unteransprüchen sind vorteilhafte Weiterbildungen der Erfindung gekennzeichnet.

Der erfindungsgemäßen Lösung liegt das Prinzip zu Grunde, eine möglichst vollständige Entkopplung zwischen Antriebsmodul und dem als Raumtragwerk ausgeführten Traggestell für die Compoundieranlage vorzusehen. Dabei bleibt die Funktionalität des Traggestells für den Transport vom Herstellerwerk bis zum Einsatzort vollständig erhalten. Das bedeutet also, dass das Mischaggregat während des Transports fest mit dem Traggestell verbunden ist. Zur Verbindung sind lösbare Verbindungen vorgesehen, die am Einsatzort wieder gelöst werden. Der Kern der Erfindung ist darin zu sehen, dass das Antriebsmodul, das in den meisten Fällen aus einem Elektromotor und einem damit gekoppelten Getriebe besteht, auf einem gemeinsamen Zwischenrahmen für beide Aggregate montiert ist. Es ist auch möglich, wenngleich weniger vorteilhaft, für diese Aggregate separate Zwischenrahmen vorzusehen. Der Effekt des Zwischenrahmens liegt darin, dass er mittels Stützen, die am Einsatzort durch Öffnungen im Boden des Traggestells auf das Fundament unter den Zwischenrahmen setzbar oder bereits an diesem montiert sind, von dem Traggestell abgehoben ist. Der Zwischenrahmen ruht also lediglich während des Transports unmittelbar auf dem Tragrahmen und ist an diesem fixiert. Am Einsatzort ist er nach Lösen der Fixierung bei auf dem Fundament aufgesetztem Traggestell geringfügig vom Boden des Traggestells abgehoben. Wesentlich dabei ist es, dass das Antriebsmodul trotz dieses Abhebens praktisch in der Stellung der Betriebsbereitschaft verharrt, die auch während des Transportvorgangs erhalten geblieben ist. Das bedeutet, dass sämtliche Anschlüsse, die während der werkseitigen Montage erstellt worden sind, während des Transports und nach der endgültigen Aufstellung am Einsatzort praktisch unverändert erhalten geblieben sind. Die Höhe der Stützen ist so bemessen, dass das Abheben des Zwischenrahmens vom Traggestell zweckmäßigerweise zum Beispiel im Bereich weniger Millimeter liegt. Es muss also lediglich sichergestellt sein, das kein direkter körperlicher Kontakt zwischen dem Zwischenrahmen und dem Traggestell mehr besteht.

Zweckmäßigerweise wird bei der erfindungsgemäßen Compoundieranlage auf ein separates Maschinengestell für das Mischaggregat, das vorzugsweise ein gleichsinnig oder gegensinnig drehbarer Doppelschneckenextruder ist, verzichtet. Dies ist ohne weiteres möglich, weil der Verfahrensteil des Mischaggregats, also das Extrudergehäuse, unmittelbar fest mit dem Antriebsmodul verbunden werden kann, welches seinerseits über den Zwischenrahmen fixierbar ist. Das Verfahrensteil kann bei ausreichend kurzer Länge dabei freihängend angeordnet sein. Im Falle eines langen Verfahrensteils empfiehlt es sich, dieses zusätzlich abzustützen. Eine solche Abstützung könnte auf dem Traggestell vorgenommen werden, wie dies für den Transportvorgang ohne hin vorgesehen würde. Zur Dämpfung der Einleitung von Schwingungen über das Verfahrensteil könnten hierbei entsprechende Schwingungsdämpfer zwischengeschaltet werden. Eindeutig bevorzugt wird jedoch eine Lösung, bei der für das Verfahrensteil mindestens eine zusätzliche Stütze vorgesehen ist, die durch eine Öffnung im Boden des Traggestells hindurch bei auf dem Fundament ruhendem Traggestell unmittelbar auf dem Fundament abgestützt ist.

Um Herstelltoleranzen an den Auflagepunkten des Fundaments für die Stützen auszugleichen, kann es vorteilhaft sein, die Stützen für die Abstützung des Zwischenrahmens und/oder die Abstützung des Verfahrensteils höhenverstellbar auszubilden. Hierzu können diese Stützen beispielsweise mit Schraubfüßen versehen werden, die in der endgültigen Montageposition fixiert werden.

Zweckmäßigerweise wird das Traggestell mit einem Raum ausgestattet, der mit geschlossenen Wänden versehen ist und von dem Teil des Traggestells abgeschottet ist, in dem das Mischaggregat aufgestellt ist. In diesem abgeschlossenen Raum werden vorzugsweise die benötigten Schaltschränke für die Mess-, Steuer- und Regeltechnik sowie zur Energieversorgung untergebracht. Zur Steuerung kann ein übliches PC-System vorgesehen werden, das ebenfalls in diesem abgeschlossenen Raum untergebracht werden kann und dabei nicht durch mechanische Schwingungen gestört wird. Dieser Raum kann auch von sonstigen schädlichen Einflüssen wie etwa Feuchtigkeit und hohen Temperaturen auf einfache Art durch Klimatisierung freigehalten werden.

Vorzugsweise ist das Traggestell im wesentlichen quaderförmig ausgebildet und weist Außenabmessungen und Anschlussmaße und -einrichtungen eines Standard-Containers auf. Hierdurch ergeben sich für den Transport über die Straße oder Schienen erhebliche Vorteile für das Handling.

Zweckmäßigerweise wird das Dach des Traggestells begehbar gemacht und mit Befestigungseinrichtungen zur Montage von Zusatzeinrichtungen für die Compoundieranlage versehen. Dann kann beispielsweise ohne Probleme eine Dosierwaage oder ein weiteres Traggestell mit den erforderlichen Dosiereinrichtungen auf dem Dach des Traggestells montiert werden. Die erforderlichen Leitungsanschlüsse für eine Dosierwaage sind im Inneren des Traggestells dann im Sinne vorbereiteter Schnittstellen bereits montiert. Für den Transport würde die Dosierwaage zur Vermeidung von Beschädigungen selbstverständlich demontiert.

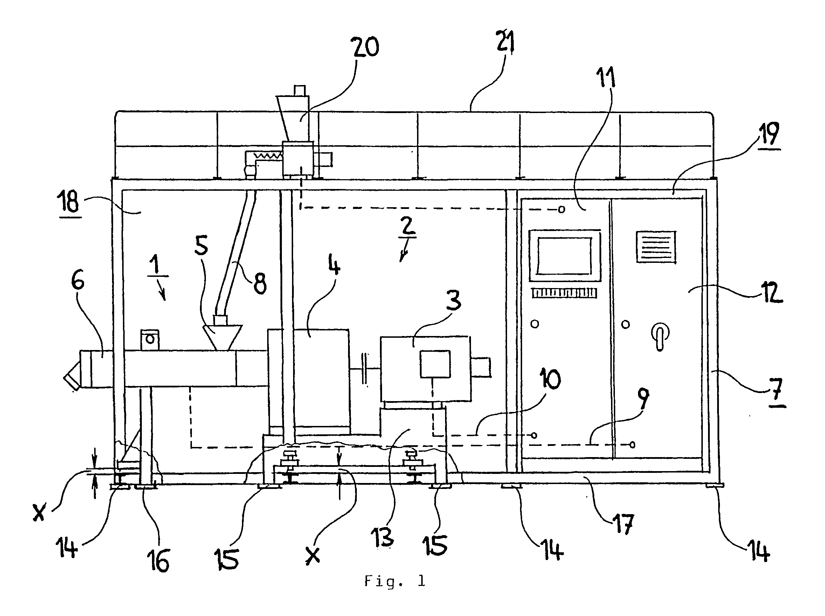

Nachfolgend wird die Erfindung anhand des in der einzigen Figur dargestellten Ausführungsbeispiels, das in einer schematischen Seitenansicht eine erfindungsgemäße Compoundieranlage zeigt, näher erläutert.

Die dargestellte Compoundieranlage weist als Mischaggregat 1 beispielsweise einen Doppelschneckenextruder auf. Das Antriebsmodul 2 dieses Mischaggregats 1 besteht aus einem Elektromotor 3 und einem damit gekoppelten Getriebe 4. Der Motor 3 und das Getriebe 4 sind auf einem gemeinsamen Zwischenrahmen 13 fest montiert. An das Getriebe 4 ist der Verfahrensteil des Extruders in Form des Extrudergehäuses 6 unmittelbar angeflanscht. Das Extrudergehäuse 6 ist mit einer trichterförmigen Zuführeinrichtung 5 für die zu verarbeitenden Materialien versehen. Das Mischaggregat 1 befindet sich innerhalb eines als Raumtragwerk ausgebildeten Traggestells 7, das in einen Teilraum 18 für das Mischaggregat 1 und einen Teilraum 19 aufgeteilt ist. Das Traggestell 7 ist im wesentlichen quaderförmig gestaltet und hat die Außenabmessungen und Anschlussmaße und Anschlusseinrichtungen eines Standard-Containers. Der Boden des Traggestells 7 ist mit dem Bezugszeichen 17 bezeichnet. Unter dem Boden 17 sind Aufsatzpunkte 14 angeordnet, mit denen das Traggestell 7 auf ein nicht dargestelltes Fundament am jeweiligen Einsatzort in der endgültigen Montagestellung aufsetzbar ist. In dem Raum 19 sind schematisch zwei Schalt- oder Steuerschränke 11, 12 angedeutet, die für den Betrieb des Mischaggregats 1 die erforderliche Energieversorgung (in erster Linie elektrischer Strom) und die Medienversorgung (z.B. Kühlwasser) sowie die Mess-, Steuer- und Regelungstechnik der Anlage sicherstellen. Die vom Schaltschrank 11 zum Elektromotor 3 führende Leitung ist mit 10 bezeichnet, während die vom Schaltschrank 12 zum Verfahrensteil 6 des Mischaggregats 1 führende Leitung mit 9 bezeichnet ist. Beide Leitungen sind gestrichelt dargestellt. Auf dem Dach des Traggestells 7, das begehbar ausgeführt ist und mit einem Geländer 21 nachträglich versehen wurde, ist eine gegen mechanische Schwingungen empfindliche Dosierwaage 20 aufgestellt, deren Aufgabe es ist, Additive, die mit dem Einsatzmaterial im Mischaggregat 1 vermischt werden sollen, über die Zuführeinrichtung 5 durch eine Zuleitung 8 in das Extrudergehäuse 6 einzuführen. Die Dosierwaage 20 wird ebenfalls über die im Schaltschrank 12 eingebaute Elektronik geführt. Der Teilraum 19 ist in nicht näher dargestellter Weise mit Außenwänden versehen und insoweit von der unmittelbaren Umgebung abgeschottet und vorzugsweise klimatisiert, so dass die darin befindlichen Einrichtungen keinen störenden äußeren Einflüssen ausgesetzt sind. Dies gilt auch in Bezug auf die Einwirkung mechanischer Schwingungen, die durch das Antriebsmodul 2 des Mischaggregats 1 verursacht werden. Zur Vermeidung der Übertragung solcher mechanischen Schwingungen auf das Traggestell 7 ist der Zwischenrahmen 13, der während des Transports fest auf dem Boden 17 des Traggestells 7 ruht, in der dargestellten Montageposition am Einsatzort vom Boden 17 abgehoben. Dies wird bewirkt durch die beiden dargestellten Stützen 15, die durch Öffnungen im Boden 17 hindurch geführt sind und sich unmittelbar auf dem nicht dargestellten Fundament abstützen. Die Höhe der Stützen 15 ist dabei so bemessen, dass die Unterseite des Zwischenrahmens 13 um ein kleines Stück X, das in der Darstellung übertrieben wiedergegeben wurde und im praktischen Fall vorzugsweise im Millimeterbereich liegt, von der Oberseite des Bodens 17 abgehoben ist. Der Zwischenrahmen 13 ist also in der endgültigen Montageposition nicht über das Traggestell 7 abgestützt, sondern ist unmittelbar über die Stützen 15 mit dem Fundament verbunden. Wegen der relativ großen Länge des Verfahrensteils 6 des Mischaggregats 1 ist auch dieses über eine Stütze 16, die durch eine Öffnung im Boden 17 des Traggestells 7 hindurchgeführt ist, unmittelbar auf dem nicht dargestellten Fundament abgestützt. Während des Transports wird das Verfahrensteil 6 von einer nicht dargestellten Halteeinrichtung gehalten, die sich innerhalb des Traggestells 7 abstützt und am Einsatzort der Anlage wieder entfernt wird. Die Position des Mischaggregats 1 ist während des Transports und nach Aufstellung der Anlage am Einsatzort innerhalb des Traggestells praktisch gleichbleibend. Es findet lediglich bei der Erreichung der endgültigen Stellung für die Betriebsbereitschaft die geringfügige Höhenverschiebung um das dargestellte Stück X statt. Diese Verschiebung ist so gering, dass sämtliche Leitungen zur Medienführung oder zur Übertragung von Signalen oder elektrischer Energie am Mischaggregat fertig angeschlossen bleiben können.

Dadurch wird es möglich, die komplette Anlage bereits werksseitig voll auszutesten und einzufahren und anschließend in nahezu unverändertem Montagezustand an den Einsatzort zu transportieren und dort sofort wieder in Betrieb zu nehmen, ohne eine aufwendige neue Einfahrprozedur durchführen zu müssen. Während des Transports sind dabei sämtliche Aggregate ausreichend befestigt. Bei der Aufstellung am Einsatzort ist dennoch durch die besondere Lagerung des Zwischenrahmens 13 auf den Stützen 15 eine vollständige mechanische Schwingungsentkopplung gewährleistet. Die Stützen 15 und 16 können im Bedarfsfall am Einsatzort angebracht werden. Es ist aber selbstverständlich auch möglich, diese bereits werksseitig fest mit dem Zwischenrahmen 13 bzw. dem Verfahrensteil 16 zu verbinden. Dabei ist es nicht erforderlich, dass die Unterseite der Stützen 15, 16 bis unter die Verbindungslinie der Aufsatzpunkte 14 an der Unterseite des Bodens 17 des Traggestells 7 reichen. Die erforderliche Höhe kann beispielsweise durch die bereits erwähnte Höhenverstellbarkeit der Stützen 15, 16 oder aber auch durch eine entsprechende Höhenlage an den vorgesehenen Aufsatzpunkten des Fundaments gewährleistet werden.

### Bezugzeichenliste:

- 1: Mischaggregat
- 2: Antriebsmodul
- 3: Motor
- 4: Getriebe
- 5: Zuführeinrichtung
- 6: Extrudergehäuse (Verfahrensteil)
- 7: Traggestell
- 8: Zuleitung
- 9: Leitung
- 10: Leitung
- 11: Schaltschrank
- 12: Schaltschrank
- 13: Zwischenrahmen
- 14: Aufsatzpunkt
- 15: Stütze
- 16: Stütze
- 17: Boden
- 18: Teilraum
- 19: Teilraum
- 20: Dosierwaage
- 21: Geländer
- X: kleiner Abstand

## Patentansprüche

1. Compoundieranlage mit einem Mischaggregat (1), das von einem Antriebsmodul (2) mechanisch antreibbar ist und mit einer oder mehreren Zuführeinrichtungen (5) für den zu verarbeitenden Werkstoff und einem oder mehreren diesem Werkstoff zuzumischenden Zusatzstoffen versehen ist, wobei das Mischaggregat (1) in einem als Raumtragwerk ausgeführten Traggestell (7) angeordnet ist und die zum Betrieb des Mischaggregats (1) erforderlichen Zu- und Ableitungen (8, 9, 10) für Einsatzstoffe und Hilfs- oder Betriebsstoffe und Energie sowie für Mess-, Steuer- und Regeltechnik in oder an dem Traggestell (7) im wesentlichen fertig installiert und mit dem Mischaggregat (1) verbunden sind, wobei das Traggestell (7) sowohl als Transportgestell für den Transport der Compoundieranlage an den Einsatzort als auch als Montagegestell für die betriebsbereite Aufstellung der Compoundieranlage auf einem Fundament am Einsatzort ausgebildet ist,
**dadurch gekennzeichnet,**
**dass** das Antriebsmodul (2) auf mindestens einem Zwischenrahmen (13) gelagert ist, der für den Transport im Traggestell (7) mittels lösbarer Verbindungen in einer der Betriebsbereitschaft entsprechenden Position fixierbar ist und dass Stützen (15) unter dem mindestens einen Zwischenrahmen (13) vorgesehen sind, die sich am Einsatzort durch Öffnungen im Boden (17) des Traggestells (7) auf dem Fundament abstützen und in ihrer Höhe so bemessen sind, dass der Zwischenrahmen (13) bei auf dem Fundament aufgesetztem Traggestell (7) geringfügig von dem Boden (17) des Traggestells (7) abgehoben ist.

2. Compoundieranlage nach Anspruch 1,
**dadurch gekennzeichnet,**
**dass** das Mischaggregat (1) als Schneckenextruder, insbesondere als gleichsinnig oder gegensinnig drehbarer Doppelschneckenextruder ausgebildet ist.

3. Compoundieranlage nach einem der Ansprüche 1 bis 2,
**dadurch gekennzeichnet,**
**dass** das Antriebsmodul (2) aus einem Elektromotor (3) und einem damit gekoppelten Getriebe (4) besteht, die auf einem gemeinsamen Zwischenrahmen (13) montiert sind.

4. Compoundieranlage nach einem der Ansprüche 1 bis 3,
**dadurch gekennzeichnet,**
**dass** das Mischaggregat (1) ohne eigenes Maschinengestell unmittelbar fest mit dem Antriebsmodul (2) verbunden ist.

5. Compoundieranlage nach den Ansprüchen 2 und 4,
**dadurch gekennzeichnet,**
**dass** für das Extrudergehäuse (6) des Mischaggregats (1) mindestens eine zusätzliche Stütze (16) vorgesehen ist, die durch eine Öffnung im Boden (17) des Traggestells (7) hindurch bei auf dem Fundament ruhendem Traggestell (7) unmittelbar auf dem Fundament abgestützt ist.

6. Compoundieranlage nach einem der Ansprüche 1 bis 5,
**dadurch gekennzeichnet,**
**dass** die Stützen (15, 16) höhenverstellbar, insbesondere mit Schraubfüßen ausgebildet sind.

7. Compoundieranlage nach einem der Ansprüche 1 bis 6,
**dadurch gekennzeichnet,**
**dass** zur Steuerung der Compoundieranlage ein PC-System vorgesehen ist, das innerhalb des Traggestells (7) angeordnet ist.

8. Compoundieranlage nach einem der Ansprüche 1 bis 7,
**dadurch gekennzeichnet,**
**dass** das Traggestell (7) im wesentlichen quaderförmig ausgebildet ist.

9. Compoundieranlage nach Anspruch 8,
**dadurch gekennzeichnet,**
**dass** das Traggestell (7) Außenabmessungen und Anschlussmaße und einrichtungen eines Standard-Containers aufweist.

10. Compoundieranlage nach einem der Ansprüche 1 bis 9, **dadurch gekennzeichnet,**
**dass** das Traggestell (7) einen Raum (19) aufweist, der mit geschlossenen Wänden ausgestattet ist und in dem die Schaltschränke (11, 12) für die Mess-, Steuer- und Regelungstechnik sowie zur Energieversorgung untergebracht sind.

11. Compoundieranlage nach einem der Ansprüche 1 bis 10,
**dadurch gekennzeichnet,**
**dass** das Dach des Traggestells (7) begehbar ist.

12. Compoundieranlage nach einem der Ansprüche 1 bis 11,
**dadurch gekennzeichnet,**
**dass** auf dem Dach des Traggestells (7) Befestigungseinrichtungen zur Montage von Zusatzeinrichtungen (Dosierwaage 20) angeordnet sind.

## Claims

1. Compounder installation comprising a mixing unit (1), which can be mechanically driven by a drive module (2) and is provided with one or more feed devices (5) for the material to be processed and one or more additives to be mixed with this material, wherein the mixing unit (1) is arranged in a supporting frame (7) configured as a three-dimensional framework, and the supply and discharge lines (8, 9, 10), which are required for operating the mixing unit (1), for materials to be used and auxiliary or process materials and energy as well as for measurement, control and regulation technologies are substantially completely installed in or on the supporting frame (7) and are connected to the mixing unit (1), wherein the supporting frame (7) is configured both as a transport frame for the transport of the compounder installation to the site of use and as a mounting frame for the erection ready for operation of the compounder installation on a substructure at the site of use, **characterised in that** the drive module (2) is mounted on at least one intermediate frame (13), which can be secured in a position corresponding to readiness fpr operation in the supporting frame (7) by means of detachable connections for transport, and **in that** supports (15) are provided underneath the at least one intermediate frame (13) and are supported on the substructure at the site of use by openings in the base (17) of the supporting frame (7) and are dimensioned with respect to their height such that the intermediate frame (13) is slightly lifted from the base (17) of the supporting frame (7) when the supporting frame (7) is placed on the substructure.

2. Compounder installation according to claim 1, **characterised in that** the mixing unit (1) is configured as a screw extruder, in particular as a twin screw extruder which can rotate in the same direction or in the opposite direction.

3. Compounder installation according to either of claims 1 or 2, **characterised in that** the drive module (2) consists of an electric motor (3) and a gearing (4) coupled thereto, which are mounted on a common intermediate frame (13).

4. Compounder installation according to any one of claims 1 to 3, **characterised in that** the mixing unit (1) is rigidly connected directly to the drive module (2) without its own machine frame.

5. Compounder installation according to claims 2 and 4, **characterised in that** at least one additional support (16) is provided for the extruder housing (6) of the mixing unit (1), the additional support being directly supported on the substructure through an opening in the base (17) of the supporting frame (7) when the supporting frame (7) rests on the substructure.

6. Compounder installation according to any one of claims 1 to 5, **characterised in that** the supports (15, 16) are height-adjustable, in particular configured with screw feet.

7. Compounder installation according to any one of claims 1 to 6, **characterised in that** a PC system, which is arranged inside the supporting frame (7), is provided to control the compounder installation.

8. Compounder installation according to any one of claims 1 to 7, **characterised in that** the supporting frame (7) is substantially cuboidal.

9. Compounder installation according to claim 8, **characterised in that** the supporting frame (7) has outer dimensions and connection dimensions and devices of a standard container.

10. Compounder installation according to any one of claims 1 to 9, **characterised in that** the supporting frame (7) has a space (19), which is equipped with closed walls and in which the switch cabinets (11, 12) for the measurement, control and regulation technologies as well as for the energy supply are accommodated.

11. Compounder installation according to any one of claims 1 to 10, **characterised in that** the roof of the supporting frame (7) can be walked on.

12. Compounder installation according to any one of claims 1 to 11, **characterised in that** fastening devices for the mounting of additional devices (proportioning weigher 20)are arranged on the roof of the supporting frame (7).

## Revendications

1. Dispositif de compoundage comprenant une unité de mélange (1), qui peut être entraînée mécaniquement par un module d'entraînement (2) et est pourvue d'un ou de plusieurs système(s) d'amenée (5) pour la matière destinée à être transformée et d'un ou de plusieurs additif(s) destiné(s) à être mélangé(s) à cette matière, l'unité de mélange (1) étant disposée dans un bâti de support (7) conçu comme une structure porteuse à trois dimensions et les conduites d'amenée et d'évacuation (8, 9, 10) de matière chargées et de matières consommables ou de carburant et d'énergie nécessaires au fonctionnement de l'unité de mélange (1) et en vue de la technique de mesure, de commande et de réglage étant installées sensiblement complètement dans ou sur le bâti de support (7) et étant reliées à l'unité de mélange (1), le bâti de support (7) étant conçu aussi bien comme un bâti de transport pour le transport du dispositif de compoundage au lieu d'utilisation que comme bâti de montage pour l'agencement prêt à fonctionner du dispositif de compoundage sur une embase au lieu d'utilisation,
**caractérisé en ce que**
le module d'entraînement (2) est logé sur au moins un faux-châssis (13), qui peut être fixé pour le transport dans le bâti de support (7) au moyen d'assemblages détachables dans une position correspondant à la position d'utilisation et **en ce que** des appuis (15) sont prévus au-dessous d'un des faux-châssis (13), qui s'appuient au lieu d'utilisation sur l'embase à travers des ouvertures dans la partie inférieure (17) du bâti de support (7) et dont la hauteur est dimensionnée de telle sorte que le faux-châssis (13) est soulevé légèrement de la partie inférieure (17) du bâti de support (7) lorsque le bâti de support (7) est monté sur l'embase.

2. Dispositif de compoundage selon la revendication 1,
**caractérisé en ce que**
l'unité de mélange (1) est conçue comme une extrudeuse à vis, notamment comme une extrudeuse à deux vis pouvant être amenée en rotation dans le même sens ou dans un sens contraire.

3. Dispositif de compoundage selon l'une quelconque des revendications 1 à 2,
**caractérisé en ce que**
le module d'entraînement (2) est constitué d'un moteur électrique (3) et d'une transmission (4) couplée à celui-ci, qui sont montés sur un faux-châssis (13) commun.

4. Dispositif de compoundage selon l'une quelconque des revendications 1 à 3,
**caractérisé en ce que**
l'unité de mélange (1) sans bâti de machine propre est reliée directement fixement au module d'entraînement (2).

5. Dispositif de compoundage selon les revendications 2 et 4,
**caractérisé en ce**
**qu'**il est prévu pour le logement d'extrudeuse (6) de l'unité de mélange (1) au moins un appui (16) additionnel, qui s'appuie directement sur l'embase à travers une ouverture dans la partie inférieure (17) du bâti de support (7) lorsque le bâti de support (7) repose sur l'embase.

6. Dispositif de compoundage selon l'une quelconque des revendications 1 à 5,
**caractérisé en ce que**
les appuis (15, 16) sont conçus de manière à être réglés en hauteur, notamment avec des pieds à vis.

7. Dispositif de compoundage selon l'une quelconque des revendications 1 à 6,
**caractérisé en ce**
**qu'**il est prévu, pour commander le dispositif de compoundage, un PC qui est disposé à l'intérieur du bâti de support (7).

8. Dispositif de compoundage selon l'une quelconque des revendications 1 à 7,
**caractérisé en ce que**
le bâti de support (7) est conçu sensiblement en forme de parallélépipède.

9. Dispositif de compoundage selon la revendication 8,
**caractérisé en ce que**
le bâti de support (7) comprend les dimensions externes et les dimensions de raccordement et les mécanismes d'un conteneur standard.

10. Dispositif de compoundage selon l'une quelconque des revendications 1 à 9,
**caractérisé en ce que**
le bâti de support (7) comprend une chambre (19), qui est équipée de parois fermées et dans laquelle sont logées les armoires de distribution (11, 12) pour la technique de mesure, de commande et de réglage ainsi que pour l'alimentation en énergie.

11. Dispositif de compoundage selon l'une quelconque des revendications 1 à 10,
**caractérisé en ce que**
le toit du bâti de support (7) est accessible.

12. Dispositif de compoundage selon l'une quelconque des revendications 1 à 11,
**caractérisé en ce que**
des systèmes de fixation destinés au montage de systèmes additionnels (balance doseuse 20) sont disposés sur le toit du bâti de support (7).
